# EUROPÄISCHE PATENTSCHRIFT

(11) **EP 1 801 050 B1**
(45) Veröffentlichungstag und Bekanntmachung des Hinweises auf die Patenterteilung: **01.10.2008**
(21) Anmeldenummer: 06026539.4
(22) Anmeldetag: 21.12.2006
(51) Int. Cl.: B65G 59/06, B65H 1/06, B42C 19/08

(54) **Vorrichtung zum Entstapeln von quaderförmigen Druckprodukten**
Device for destacking cuboid printing products
Dispositif destiné à désempiler des produits d'impression de forme carrée

(30) Priorität: 23.12.2005 DE 102005062198
(43) Veröffentlichungstag der Anmeldung: 27.06.2007
(73) Patentinhaber: Kolbus GmbH & Co. KG, D-32369 Rahden (DE)
(72) Erfinder: Gerke, Klaus, 27211 Bassum (DE)

(56) Entgegenhaltungen:
- DE-A1- 19 811 635

## Beschreibung

Die vorliegende Erfindung betrifft eine Vorrichtung zum Entstapeln von Büchern, Broschuren, Buchblocks o. dgl. quaderförmigen Druckprodukten gemäß dem Oberbegriff des Anspruchs 1.

Entstapelungseinrichtungen kommen zum Einsatz, um gestapelte Produkte, wie Bücher, Broschuren, Buchblocks o. dgl., zu vereinzeln und einer Verarbeitungsmaschine zuzuführen.

Bekannt sind Buchblockanleger mit einem Stapelschacht zur Aufnahme von aus einem Speicher, z.B. ein Staurollenförderer, einzeln oder in Stapeln zugeführten Buchblocks, wobei der Stapelschacht in Zuförderrichtung orientierte Tragstützen als Zwischenauflage aufweist, die zum senkrechten Ablegen der Buchblocks seitlich aus dem Stapelschacht herausbewegbar sind. Der jeweils unterste Buchblock im Stapelschacht wird vorgeschoben und von einem Abzugsförderer an den Einfuhrförderer der nachfolgenden Maschine übergeben. Die Systeme sind aufwändig und weisen prinzipbedingt unterschiedliche Höhen für die Einfuhr und Ausfuhr der Buchblocks auf.

Als gattungsgemäße Entstapelungsvorrichtung ist aus der DE 198 11 635 A1 ein bezüglich der Einfuhr und Ausfuhr höhenkonstanter Buchblockanleger bekannt, mit einem endlosen, von einem frequenzgeregelten Antrieb angetriebenen Vereinzelungsband mit einer griffigen Oberfläche, dem die Buchblockstapel nacheinander zugeführt werden, mit Seitenbegrenzungen für die Buchblockstapel und mit einem höhenverstellbaren, einen Durchlass für den jeweils zu vereinzelnden untersten Buchblock bildenden Rückhalteelement. Das Rückhalteelement kann in Förderrichtung schräggestellt werden, was einer Entlastung des zu vereinzelnden Buchblocks und somit der Funktionssicherheit beim Vereinzeln zweckdienlich ist.

Im Einlauf des Vereinzelungsbands befindet sich ein Auflageblech zum Abstützen der Hinterkante des zweituntersten Buchblocks gegenüber dem Vereinzelungsband beim Wegziehen des untersten Buchblocks. Das genannte Rückhalteelement ist hierfür entsprechend der Formatlänge der Buchblocks zum Vereinzelungsband positionierbar. Dem Vereinzelungsband ist noch ein taktweise angetriebenes Zuführband zum Nachführen eines Folgestapels in die Vereinzelungsposition des Vereinzelungsbands bis zu dem Rückhalteelement zugeordnet.

Mit der aus DE 198 11 635 A1 bekannten Entstapelungseinrichtung lassen sich Buchblockstapel schnell und einfach entstapeln. Bei dicken, kleinformatigen Buchblocks besteht jedoch die Gefahr, dass beim Wegziehen des untersten Buchblocks aus einem hohen Stapel der darüber liegende Reststapel nach hinten umfällt.

Der vorliegenden Erfindung liegt nun die Aufgabe zugrunde, eine Vorrichtung zum Entstapeln von Büchern, Broschuren, Buchblocks o. dgl. quaderförmigen Druckprodukten gemäß dem Oberbegriff des Anspruchs 1 derart auszubilden, dass bei einfacher Konstruktion ein sehr großes Format- und Dickenspektrum der zu entstapelnden Druckprodukte verarbeitbar ist. Insbesondere sollen dicke, kleinformatige Buchblocks aus hohen Stapeln zuverlässig und einwandfrei vereinzelt werden.

Diese Aufgabe wird erfindungsgemäß durch die Merkmale des kennzeichnenden Teils des Anspruchs 1 gelöst. Mit dem wenigstens einen Abstützelement an der Hinterseite des Stapels wird ein hoher Stapel beim Vereinzeln des jeweils untersten Druckprodukts am Umfallen gehindert und seine Stapelordnung bleibt erhalten. Das Abstützelement befindet sich in einem definierten Abstand hinter dem Stapel und ermöglicht den im Reststapel befindlichen Druckprodukten, sich in einer Art Schaukelbewegung nach unten zu bewegen. Mit dem wegbewegbaren Abstützelement ist quasi ein Magazinschacht gebildet worden, welcher produktschonend und zuverlässig mit hohen Stapeln beladen werden kann, indem die Folgestapel auf dem Transportniveau des Vereinzelungsbands nachgeführt und nicht wie sonst üblich in den Schacht abgeworfen werden. Es ergibt sich eine ergonomische Anlegehöhe und die manuelle Anlegeleistung kann durch die hohen Stapel deutlich erhöht werden. Bei Entnahme hoher Stapel aus einer Pufferstrecke erhöht sich dessen Speicherkapazität beträchtlich.

Vorzugsweise ist das wenigstens eine Abstützelement an der Seitenbegrenzung angeordnet. Beim Vereinzeln von längszugeführten an lediglich einer Längskante geschlossenen Druckprodukten wird das Rückhalteelement nahe der vorderen Ecke dieser Längskante positioniert. Die Druckprodukte legen sich mit der diagonal gegenüberliegenden Ecke an die Seitenführung an, sodass ein hier angeordnetes Abstützelement allein schon ausreichend ist. Mit Vorteil weist die Entstapelungsvorrichtung an beiden Seitenbegrenzungen angeordnete Abstützelemente auf, sodass alle vier Stapelecken geführt sind.

In einer bevorzugten Ausführungsform weist das Abstützelement eine leistenförmige, nahe der vertikalen Stapelkante auf die Stapelhinterseite gerichtete und sich zumindest bis zur maximalen Stapelhöhe erstreckende Stützfläche auf. So wird insbesondere das oberste Produkt im Stapel am Herunterfallen gehindert.

Eine besonders einfache Vorrichtung ergibt sich, wenn sich das Abstützelement beim Nachführen eines Folgestapels selbsttätig aus dem Förderweg bewegt. Gesteuerte Bewegungen sind nicht erforderlich. Vorzugsweise wird das Abstützelement durch eine Federkraft erzeugende Antriebsmittel in Abstützposition gehalten, wobei das Abstützelement entgegen der Federkraft selbsttätig vom nachgeführten Folgestapel in eine Rückzugsposition hinter die Seitenbegrenzung bewegt wird. Die Federkraft ist einstellbar, wodurch auf empfindliche Druckprodukte Rücksicht genommen werden kann. Als kostengünstiges Antriebsmittel erweisen sich ein oder mehrere Federelemente, vorzugsweise - weil platzsparend - als Blattfeder ausgebildet, mit der das Abstützelement im Wesentlichen quer zur Förderrichtung des Zuführ- und Vereinzelungsbands aus dem Förderweg bewegbar ist.

Das selbsttätige Wegbewegen des Abstützelements beim Nachführen des Folgestapels wird in einfacher Weise dadurch ermöglicht, dass das Abstützelement auf der vom abzustützenden Stapel wegweisenden Seite eine zum Folgestapel zeigende Anlaufschräge aufweist.

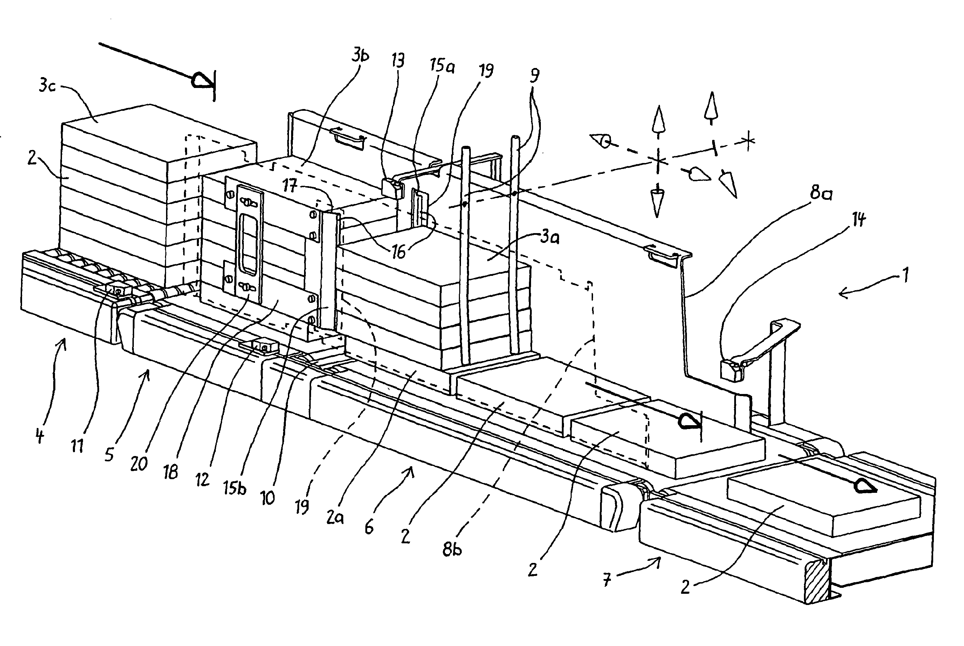

Die Erfindung wird unter Bezugnahme auf die Zeichnung anhand eines Ausführungsbeispiels näher erläutert. Die einzige Figur zeigt in perspektivischer Ansicht eine Entstapelungsvorrichtung, in der aus Darstellungsgründen einige der Befestigungs- und Verstellelemente weggelassen sind.

Die Entstapelungsvorrichtung 1 besteht im Wesentlichen aus einem endlosen, von einem frequenzgeregelten Antrieb angetriebenen Vereinzelungsband 6 mit einer griffigen Oberfläche, dem die Buchblockstapel 3 a, b, c nacheinander zugeführt werden, mit Seitenbegrenzungen 8 a, b für die Buchblockstapel 3 a, b und mit einem höhenverstellbaren, einen Durchlass für den jeweils aus dem Stapel 3 a zu vereinzelnden untersten Buchblock 2 a bildenden Rückhalteelement 9. In der Figur ist die rechte Seitenbegrenzung 8 b aus Darstellungsgründen weggelassen und lediglich mit gestrichelten Außenkonturen dargestellt.

Im Einlauf des Vereinzelungsbands 6 befindet sich ein Auflageblech 10 zum Abstützen der Hinterkante des zweituntersten Buchblocks 2 gegenüber dem Vereinzelungsband 6 beim Wegziehen des untersten Buchblocks 2 a. Das Rückhalteelement 9 ist hierfür entsprechend der Formatlänge der Buchblocks 2 zum Vereinzelungsband 6 positionierbar. Es kann zudem in Förderrichtung schräggestellt werden, was einer Entlastung des zu vereinzelnden Buchblocks 2 a zweckdienlich ist. Die aufgezeigten Einstell- und Verstellmöglichkeiten des Rückhalteelements 9 sind in der Figur durch gestrichelte Doppelpfeile symbolisch dargestellt.

Dem Vereinzelungsband 6 ist ein taktweise angetriebenes Zuführband 5 zum Nachführen eines Folgestapels 3 b in die Vereinzelungsposition des Vereinzelungsbands 6 bis zu dem Rückhalteelement 9 zugeordnet. Der Buchblockstapel 3 b befindet sich auf dem Zuführband 5 quasi in Wartestellung. Weitere Buchblockstapel 3 c liegen auf einem Staurollenförderer 4 bereit, der entweder manuell beschickt wird oder als Puffer Bestandteil einer verketteten Fertigungsfließstrecke ist.

Aufgrund des Vereinzelungsprinzips sind die vereinzelten Buchblocks 2 auf dem Vereinzelungsband 6 mit einem geringen Abstand hintereinander aufgereiht. Durch die Übergabe an ein schneller laufendes Transportband 7 sind definierte Taktabstände der Buchblocks 2 zueinander realisierbar. Durch Start-Stopp-Betrieb des Vereinzelungsbands 6 können Buchblocks 2 auf Anforderung an eine nachgeordnete Verarbeitungsmaschine abgegeben werden.

Die Ablaufsteuerung des Vereinzelungsprozesses wird über Lichtschranken 11 bis 14 geregelt. Eine erste Lichtschranke 11 befindet sich am Auslauf des Staurollenförderers 4 und unterbricht dessen Transport, wenn ein Buchblockstapel 3 c am Auslauf erkannt wird und sich noch ein anderer Buchblockstapel 3 b in der Warteposition auf dem Zuführband 5 befindet. Letztgenannte Warteposition ist durch die Lichtschranke 12 bestimmt. Der Buchblockstapel 3 b wird in die Vereinzelungsposition des Vereinzelungsbands 6 nachgeführt, wenn die Lichtschranke 13 keinen Buchblock 2 des aufzulösenden Buchblockstapels 3 a mehr erkennt. Die Lichtschranke 14 startet und stoppt das Vereinzelungsband 6 im Blick auf eine taktsynchrone Abgabe der vereinzelten Buchblocks 2 an eine nachgeordnete Verarbeitungsmaschine.

Erfindungsgemäß sind in jeder der beiden Seitenbegrenzungen 8 a, b eine Abstützleiste 15 a bzw. 15 b integriert, welche durch eine Öffnung 19 in der jeweiligen Seitenbegrenzung 8 a bzw. b in den Förderweg der Buchblockstapel 3 a, b, c hineinragt. Die Abstützleisten 15 a, b sind an Blattfedern 18 befestigt, die wiederum an den Außenseiten der Seitenbegrenzungen 8 a, b befestigt sind und über ihre Federkraft dafür sorgen, dass die jeweilige Abstützleiste 15 a bzw. b in den Förderweg gedrückt wird. Mit einer verschiebbaren Einstellplatte 20 ist die Federkraft der Blattfedern 18 einstellbar.

Die Abstützleiste 15 a bzw. b weist eine leistenförmige, nahe der vertikalen Stapelkante auf die Hinterseite des Buchblockstapels 3 a gerichtete und sich bis zur maximalen Stapelhöhe erstreckende Stützfläche 16 auf. Beim Ausschieben des jeweils untersten Buchblocks 2 a fallen die darüber liegenden Buchblocks 2 nach hinten, lehnen sich dabei aber mit ihrer Hinterseite gegen die Stützfläche 16 an und rutschen an ihr nach unten. Die Stapelordnung bleibt selbst für dicke, kleinformatige Buchblocks 2 erhalten.

Beim Nachführen des Folgestapels 3 b bewegen sich die Abstützleisten 15 a , b selbsttätig aus der Abstützposition innerhalb des Förderwegs der Buchblockstapel 3 a b, c in eine Rückzugsposition hinter die Seitenbegrenzungen 8 a, b. Dies geschieht durch das Auflaufen der vorderen Stapelkanten des nachgeführten Buchblockstapels 3 b auf eine auf der Rückseite der Abstützleiste 15 a bzw. b ausgebildeten Anlaufschräge 17, wodurch die Abstützleisten 15 a , b entgegen der durch die Blattfedern 18 erzeugten Federkraft im Wesentlichen quer zur Förderrichtung des Zuführ- und Vereinzelungsbands 5 und 6 aus dem Förderweg geschoben werden.

### Bezugszeichenliste

- **1**: Entstapelungsvorrichtung
- **2**: Buchblock
- **2 a**: unterster Buchblock
- **3 a, b, c**: Buchblockstapel
- **4**: Staurollenförderer
- **5**: Zuführband
- **6**: Vereinzelungsband
- **7**: Transportband
- **8 a, b**: linke, rechte Seitenbegrenzung
- **9**: Rückhalteelement
- **10**: Auflageblech
- **11-14**: Lichtschranken
- **15 a, b**: linke, rechte Abstützleiste
- **16**: Stützfläche
- **17**: Anlaufschräge
- **18**: Blattfeder
- **19**: Öffnung
- **20**: Einstellplatte

## Patentansprüche

1. Vorrichtung zum Entstapeln von Büchern, Broschuren, Buchblocks o. dgl. quaderförmigen Druckprodukten (2),
• mit einem von einem regelbaren Antrieb antreibbaren Vereinzelungsband (6), zum taktgemäßen Vereinzeln des jeweils untersten Druckprodukts (2 a) aus dem Stapel (3 a),
• mit auf Format einstellbaren, den Stapel (3 a) auf dem Vereinzelungsband (6) positionierenden Seitenbegrenzungen (8 a, b),
• mit einem höheneinstellbaren, einen Durchlass für das jeweils zu vereinzelnde Druckprodukt (2 a) bildenden Rückhalteelement (9),
• mit einer Auflage (10) im Einlaufbereich des Vereinzelungsbands (6), zum Abstützen der Hinterkante des zweituntersten Druckprodukts (2) beim Vereinzeln des untersten Druckprodukts (2 a) , und
• mit einem dem Vereinzelungsband (6) vorgeordneten Zuführband (5), zum Nachführen eines Folgestapels (3 b) in die Vereinzelungsposition,
**gekennzeichnet**
• **durch** wenigstens ein in einem definierten Abstand hinter dem Stapel (3 a) angeordnetes Abstützelement (15 a, b), welches beim Nachführen eines Folgestapels (3 b) aus dem Förderweg bewegbar ist.

2. Vorrichtung nach Anspruch 1, **dadurch gekennzeichnet, dass** das wenigstens eine Abstützelement (15 a bzw. b) an der Seitenbegrenzung (8 a bzw. b) angeordnet ist.

3. Vorrichtung nach Anspruche 1 oder 2, **dadurch gekennzeichnet, dass** je ein Abstützelement (15 a, b) an den beiden Seitenbegrenzungen (8 a, b) angeordnet ist.

4. Vorrichtung nach einem der Ansprüche 1 bis 3, **dadurch gekennzeichnet, dass** das Abstützelement (15 a, b) eine leistenförmige, nahe der vertikalen Stapelkante auf die Stapelhinterseite gerichtete und sich zumindest bis zur maximalen Stapelhöhe erstreckende Stützfläche (16) aufweist.

5. Vorrichtung nach einem der Ansprüche 1 bis 4, **dadurch gekennzeichnet, dass** sich das Abstützelement (15 a, b) beim Nachführen eines Folgestapels (3 b) selbsttätig aus dem Förderweg bewegt.

6. Vorrichtung nach Anspruch 5, **dadurch gekennzeichnet, dass** das Abstützelement (15 a, b) durch eine Federkraft erzeugende Antriebsmittel (18) in Abstützposition gehalten wird, wobei das Abstützelement (15 a, b) entgegen der Federkraft vom nachgeführten Folgestapel (3 b) in eine Rückzugsposition hinter die Seitenbegrenzung (8 a, b) bewegbar ist.

7. Vorrichtung nach Anspruch 6, **dadurch gekennzeichnet, dass** die Federkraft einstellbar ist.

8. Vorrichtung nach Anspruch 6 oder 7, **dadurch gekennzeichnet, dass** das Antriebsmittel von ein oder mehreren Federelementen (8) gebildet ist.

9. Vorrichtung nach Anspruch 8, **dadurch gekennzeichnet, dass** das Federelement eine Blattfeder (8) ist, an der das Abstützelement (15 a, b) befestigt ist.

10. Vorrichtung nach einem der Ansprüche 5 bis 9, **dadurch gekennzeichnet, dass** das Abstützelement (15 a, b) auf der vom abzustützenden Stapel (3 a) wegweisenden Seite eine zum Folgestapel (3 b) zeigende Anlaufschräge (17) aufweist.

## Claims

1. A device for destacking books, brochures, or similar cubic printed products (2),
• with a separating belt (6) that is powered by a controllable drive and serves for the cyclic separation of the respective bottom printed product (2 a) from the stack (3 a),
• with lateral boundaries (8 a, b) that can be adjusted to the respective format and position the stack (3 a) on the separating belt (6),
• with a height-adjustable retaining element (9) that forms a passage for the respective printed product (2 a) to be separated,
• with a support (10) in the infeed region of the separating belt (6) in order to support the rear edge of the printed product (2) lying on top of the bottom printed product during the separation of the bottom printed product (2 a), and
• with a feeding belt (5) that is arranged upstream of the separating belt (6) and serves for delivering the next stack (3 b) into the separating position,
**characterized**
• **in** at least one supporting element (15 a, b) that is arranged at a defined distance behind the stack (3 a) and can be moved out of the transport path during the delivery of the next stack (3 b).

2. The device according to Claim 1, **characterized in that** the at least one supporting element (15 a or b) is arranged on the lateral boundary (8 a or b).

3. The device according to Claim 1 or 2, **characterized in that** a supporting element (15 a, b) is respectively arranged on each lateral boundary (8 a, b).

4. The device according to one of Claims 1 to 3, **characterized in that** the supporting element (15 a, b) features a strip-shaped supporting surface (16) that is directed toward the rear side of the stack near the vertical stack edge and extends at least as far as the maximum stack height.

5. The device according to one of Claims 1 to 4, **characterized in that** the supporting element (15 a, b) automatically moves out of the transport path during the delivery of the next stack (3 b).

6. The device according to Claim 5, **characterized in that** the supporting element (15 a, b) is held in the supporting position by a driving means (18) that generates a spring force, wherein the supporting element (15 a, b) can be moved into a retracted position outside the lateral boundary (8 a, b) against the spring force by the stack (3 b) being delivered.

7. The device according to Claim 6, **characterized in that** the spring force is adjustable.

8. The device according to Claim 6 or 7, **characterized in that** the driving means consists of one or more spring elements (8).

9. The device according to Claim 8, **characterized in that** the spring element consists of a leaf spring (8), on which the supporting element (15 a, b) is fixed.

10. The device according to one of Claims 5 to 9, **characterized in that** the supporting element (15 a, b) features a ramp (17) that is directed toward the next stack (3 b) on the side pointing away from the stack (3 a) to be supported.

## Revendications

1. Dispositif pour désempiler des livres, des brochures, des corps d'ouvrage ou des produits d'impression (2) similaires de forme carrée,
• avec une bande de désolidarisation (6) susceptible d'être entraînée par un entraînement réglable, pour la désolidarisation en cadence du produit d'impression (2 a) chaque fois inférieur de la pile (3 a),
• avec des délimitations latérales (8 a, b) réglables au format, positionnant la pile (3 a) sur la bande de désolidarisation (6),
• avec un élément de retenue (9) réglable en hauteur, formant un passage pour le produit d'impression (2 a) devant être chaque fois désolidarisé,
• avec un appui (10) dans la zone d'entrée de la bande de désolidarisation (6), pour soutenir l'arête arrière de l'avant-dernier produit d'impression (2) inférieur, lors de la désolidarisation du produit d'impression inférieur (2 a) , et
• avec une bande d'alimentation (5) montée en amont de la bande de désolidarisation (6), pour faire suivre une pile suivante (3 b) dans la position de désolidarisation,
**caractérisé**
• **par** au moins un élément de soutien (15 a, b) disposé à un écart défini derrière la pile (3 a) qui est mobile hors du trajet de transport lorsqu'on fait suivre une pile suivante (3 b).

2. Dispositif selon la revendication 1, **caractérisé en ce que** le au moins un élément de soutien (15 a ou b) est disposé sur la délimitation latérale (8 a ou b).

3. Dispositif selon la revendication 1 ou 2, **caractérisé en ce que** chaque fois un élément de soutien (15 a ou b) est disposé sur les deux délimitations latérales (8 a, b).

4. Dispositif selon l'une quelconque des revendications 1 à 3, **caractérisé en ce que** l'élément de soutien (15 a, b) comporte une surface de support (16) en forme de baguette, orientée vers la face arrière de la pile, à proximité de l'arête verticale de la pile et s'étendant au moins jusqu'à la hauteur d'empilage maximale.

5. Dispositif selon l'une quelconque des revendications 1 à 4, **caractérisé en ce que** l'élément de soutien (15 a, b) se déplace automatiquement hors du trajet de transport lorsqu'on fait suivre une pile suivante (3 b).

6. Dispositif selon la revendication 5, **caractérisé en ce que** l'élément de soutien (15 a, b) est maintenu en position de soutien par un moyen d'entraînement (18) générant une force de ressort, l'élément de soutien (15 a, b) étant mobile à l'encontre de la force de ressort, de la pile suivante (3 b) que l'on fait suivre, dans une position de retrait, derrière la délimitation latérale (8 a, b).

7. Dispositif selon la revendication 6, **caractérisé en ce que** la force de ressort est réglable .

8. Dispositif selon la revendication 6 ou 7, **caractérisé en ce que** le moyen d'entraînement est formé par un ou par plusieurs éléments à ressort (8).

9. Dispositif selon la revendication 8, **caractérisé en ce que** l'élément à ressort est un ressort à lames (8) sur lequel est fixé l'élément de soutien (15 a, b) .

10. Dispositif selon l'une quelconque des revendications 5 à 9, **caractérisé en ce que** sur le côté opposé à la pile (3 a) à soutenir, l'élément de soutien (15 a, b) comporte une inclinaison de démarrage (17) dirigée vers la pile suivante (3 b).
